(19) Europäisches Patentamt / European Patent Office / Office européen des brevets

(11) **EP 2 850 797 B1**

(12) **FASCICULE DE BREVET EUROPEEN**

(45) Date de publication et mention
de la délivrance du brevet:
**30.08.2017 Bulletin 2017/35**

(21) Numéro de dépôt: **13727281.1**

(22) Date de dépôt: **13.05.2013**

(51) Int Cl.:
*H04B 7/0456* *(2017.01)*   *H04L 27/34* *(2006.01)*
*H04B 7/06* *(2006.01)*   *H04L 27/26* *(2006.01)*
*H04L 25/03* *(2006.01)*

(86) Numéro de dépôt international:
**PCT/FR2013/051043**

(87) Numéro de publication internationale:
**WO 2013/171417 (21.11.2013 Gazette 2013/47)**

(54) **PROCÉDÉ DE COMMUNICATION SANS-FIL À HAUT DÉBIT AVEC UN RÉCEPTEUR À ANTENNES MULTIPLES**

VERFAHREN FÜR DRAHTLOSE KOMMUNIKATION MIT HOHER BITFREQUENZ MITHILFE EINES EMPFÄNGERS MIT MEHREREN AUSGÄNGEN

METHOD FOR HIGH BIT RATE WIRELESS COMMUNICATION USING A MULTIPLE OUTPUT RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.05.2012 FR 1254510**

(43) Date de publication de la demande:
**25.03.2015 Bulletin 2015/13**

(73) Titulaire: **Orange**
**75015 Paris (FR)**

(72) Inventeur: **PHAN HUY, Dinh Thuy**
**F-75004 Paris (FR)**

(56) Documents cités:
**US-A1- 2012 087 382**

• **Nizar Zorba, Faouzi Bader: "Spatial Diversity Scheme to Efficiently Cancel ISI and ICI in OFDM-OQAM Systems", Journal of Computer Systems, Networks, and Communications, vol. 2010, 576243, 4 octobre 2010 (2010-10-04), pages 1-10, XP002710702, Hindawi Publishing Corporation DOI: 10.1155/2010/576243 Extrait de l'Internet: URL:http://www.hindawi.com/journals/jcnc/2 010/576243/ [extrait le 2013-08-07]**
• **MIQUEL PAYAROÌ ET AL: "Performance comparison between FBMC and OFDM in MIMO systems under channel uncertainty", WIRELESS CONFERENCE (EW), 2010 EUROPEAN, IEEE, PISCATAWAY, NJ, USA, 12 avril 2010 (2010-04-12), pages 1023-1030, XP031688574, ISBN: 978-1-4244-5999-5**
• **MIQUEL PAYARO ET AL: "Resource Allocation in Multi-Antenna MAC Networks: FBMC vs OFDM", VEHICULAR TECHNOLOGY CONFERENCE (VTC SPRING), 2011 IEEE 73RD, IEEE, 15 mai 2011 (2011-05-15), pages 1-5, XP031896965, DOI: 10.1109/VETECS.2011.5956565 ISBN: 978-1-4244-8332-7**

**Description**

La présente invention concerne les communications sans-fil, notamment les communications radio selon les normes IEEE 802.11, IEEE 802.16, 3GPP LTE Advanced, et DVB.

Plus précisément, l'invention concerne un système de transmission de données comprenant un émetteur équipé d'une ou plusieurs antenne(s) d'émission, et un récepteur équipé d'au moins deux antennes de réception. Un tel système est dit SIMO (initiales des mots anglais « *Single Input Multiple Output* ») lorsque le système ne comprend qu'une seule antenne d'émission, et MIMO (initiales des mots anglais « *Multiple Input Multiple Output* ») lorsque le système comprend plusieurs antennes d'émission.

Par rapport aux systèmes SISO (initiales des mots anglais « *Single Input Single Output* ») comportant une seule antenne d'émission et une seule antenne de réception, les systèmes SIMO/MIMO permettent avantageusement, au moyen du multiplexage spatial, d'augmenter le débit de transmission de données. On rappelle à cet égard que la technique du « multiplexage spatial » consiste à découper le flux de données à transmettre en un certain nombre de sous-flux (ce qui, avantageusement, divise d'autant la bande passante requise), puis à transmettre simultanément les différents sous-flux, et enfin à recombiner adéquatement les signaux respectifs reçus sur les antennes de réception. Le nombre de signaux effectivement indépendants que l'on peut ainsi transmettre au moyen d'un système MIMO est égal au rang de la matrice de transfert **H** (matrice de dimension $N \cdot M$, où $N$ désigne le nombre d'antennes de réception, et $M$ le nombre d'antennes d'émission). L'efficacité spectrale du système dépend donc du nombre de signaux indépendants, mais aussi du BER (initiales des mots anglais « *Bit Error Rate* » signifiant « Taux d'Erreur en Bits ») associé à chaque sous-flux-d'où l'intérêt de prévoir en outre un codage multi-antennes (appelé « codage espace-temps ») afin de réduire les BER.

On rappelle par ailleurs que la modulation dite OFDM (initiales des mots anglais « *Orthogonal Frequency Division Multiplexing* » *signifiant* « Multiplexage de Fréquences Orthogonales ») réduit efficacement les interférences entre symboles de données. De plus, l'OFDM est relativement peu complexe à mettre en oeuvre ; notamment, la modulation d'un signal en OFDM peut être mise en oeuvre de manière efficace au moyen d'une transformée de Fourier rapide inverse (IFFT), et la démodulation d'un signal OFDM peut être mise en oeuvre de manière efficace au moyen d'une transformée de Fourier rapide directe (FFT). Toutefois, la modulation OFDM présente l'inconvénient d'être peu efficace spectralement (en raison de l'utilisation d'un « préfixe cyclique »).

Il a donc été proposé une autre modulation, appelée « OFDM/OQAM », qui présente l'avantage d'être efficace spectralement (car elle ne nécessite pas de préfixe cyclique, contrairement à l'OFDM), tout en s'affranchissant (comme l'OFDM) des interférences entre symboles de manière peu complexe (l'acronyme OQAM est formé des initiales des mots anglais « *Offset Quadrature Amplitude Modulation* » signifiant « Modulation d'Amplitude en Quadrature Décalée »).

Toutefois, cette quasi-absence d'interférences entre symboles n'est obtenue que dans le cas des systèmes SISO. En effet, comme démontré dans l'article de M. Payarô, A. Pascual-Iserte et M. Nájar intitulé « Performance Comparison between FBMC and OFDM in MIMO Systems under Channel Uncertainty» (IEEE Wireless Conférence 2010, Piscataway, NJ, USA, avril 2010), la modulation OFDM/OQAM cause, dans le cas des systèmes SIMO/MIMO, des interférences entre symboles, dont l'importance est d'autant plus grande que les erreurs (en pratique inévitables) sur l'estimation du canal sont grandes.

Dans ce même article, les auteurs proposent un procédé de multiplexage spatial/démultiplexage spatial destiné à réduire ces interférences. Plus précisément, étant donnés un émetteur muni de $M$ antennes d'émission et un récepteur muni de $N$ antennes de réception, le récepteur obtient une estimée de la matrice de transfert du canal MIMO entre l'émetteur et le récepteur pour une sous-porteuse donnée ; on détermine ensuite, pour cette sous-porteuse, un vecteur de multiplexage (à $M$ composantes complexes) proportionnel à un vecteur propre de cette estimée associé à la valeur propre la plus grande de cette estimée ; enfin, le récepteur détermine un vecteur de démultiplexage (à $N$ composantes complexes) pour cette sous-porteuse en recevant des symboles pilotes envoyés par l'émetteur, et en minimisant l'erreur quadratique moyenne sur les symboles reçus après démultiplexage.

Ce procédé selon l'article de Payarô *et al.* a pour inconvénient de requérir des calculs très complexes, notamment au niveau du récepteur. Il a également été proposé, dans l'article de Nizar Zorba et Faouzi Bader, intitulé "Spatial diversity Scheme to Efficiently Cancel ISI and ICI in OFDM-OQAM Systems" (Journal of Computer Systems, Networks, and Communications, vol. 2010, Article ID 576243, Hindawi Publishing Corporation), un procédé de précodage de type "Alamouti" avec une modulation OFDM/OQAM, destiné à réduire les interférences entre symboles. La présente invention concerne donc un procédé d'émission sans-fil, par un émetteur sans-fil muni de $M \geq 1$ antenne(s) d'émission, de données destinées à $R \geq 1$ récepteur(s) sans-fil, chaque récepteur sans-fil n°$r$, où $r = 1, ..., R$ étant muni *de* $N_r$ antennes de réception, où $\sum_{r=1}^{R} N_r = N$ et $N \geq 2$, dans lequel lesdites données sont transmises au moyen d'une modulation OFDM/OQAM comprenant $L \geq 1$ sous-porteuses, ledit procédé comprenant, pour au moins une valeur de l'entier $l$, où $0 \leq l \leq L - 1$, une étape préalable d'obtention d'une estimée $\hat{\mathbf{H}}^{(l)}$ de la matrice de transfert, de dimension $N \cdot M$, du canal

MIMO entre lesdites antennes d'émission et lesdites antennes de réception. Ledit procédé d'émission sans-fil est remarquable en ce que, pour ladite valeur de $l$, il comprend en outre les étapes suivantes :

- placement de données à transmettre dans un vecteur de données $X^{(l)}$ à $N$ composantes réelles,
- calcul d'un vecteur de données codées $S^{(l)} \equiv \mathbf{W}^{(l)} \cdot X^{(l)}$ à $M$ composantes, où $\mathbf{W}^{(l)}$ est une matrice de précodage de dimension $M \cdot N$ de la forme :

$$\mathbf{W}^{(l)} = \mathbf{Q} \cdot \Re(\hat{\mathbf{H}}^{(l)} \cdot \mathbf{P}^{(l)}),$$

où :

    ○ $\mathbf{P}^{(l)}$ est la matrice, de dimension $M \cdot N$, associée à un multiplexage spatial, R() représente l'extraction de la partie réelle, et

$$\mathbf{Q} = \left(\hat{\mathbf{H}}^{(l)}\right)^{\mathbf{H}} \cdot \left[\hat{\mathbf{H}}^{(l)} \cdot \left(\hat{\mathbf{H}}^{(l)}\right)^{\mathbf{H}}\right]^{-1},$$

    ○                 et

- émission dudit vecteur de données codées $S^{(l)}$ sur la sous-porteuse $l$, en émettant la m-ième composante, où $m$ = 1,2, ..., $M$, du vecteur $S^{(l)}$ à partir de la m-ième antenne d'émission.

L'invention concerne également un procédé de communication sans-fil. Ledit procédé est remarquable en ce qu'il comprend les étapes d'un procédé d'émission tel que décrit succinctement ci-dessus, et en ce que, pour ladite valeur de $l$, au moins un récepteur sans-fil n° $r$, où r = 1, ..., R, met en oeuvre les étapes suivantes :

- réception desdites données codées,
- détermination d'un vecteur reçu $Y_{(r)}^{(l)}$, et
- obtention d'un vecteur de données décodées $T_{(r)}^{(l)}$ à partir dudit vecteur reçu $Y_{(r)}^{(l)}$,

où le vecteur reçu $Y_{(r)}^{(l)}$ est le vecteur à $N_r$ composantes réelles dont la $n$-ième composante, où $n$ = 1,2, ..., $N_r$, est égale au symbole associé à la sous-porteuse $l$ reçu sur la $n$-ième antenne de réception, après démodulation OFDM/OQAM et extraction de la partie réelle.

Ainsi, le procédé d'émission décrit succinctement ci-dessus combine un précodage particulier comprenant un multiplexage spatial, avec une modulation OFDM/OQAM. Cette combinaison selon l'invention, appliquée à un système SIMO/MIMO, permet de bénéficier à la fois de l'efficacité spectrale offerte par le multiplexage spatial et de celle offerte par la modulation OFDM/OQAM.

De plus, très avantageusement, la combinaison selon la présente invention permet, après démodulation OFDM/OQAM et une simple extraction de la partie réelle, d'éviter toute interférence entre symboles et entre sous-porteuses, et ce, quel que soit le nombre d'antennes d'émission ou de réception. En effet, comme démontré ci-dessous, ledit vecteur reçu $Y_{(r)}^{(l)}$ a la même forme qu'un signal OFDM classique, c'est-à-dire sans interférences, à ceci près que le canal, les données et le bruit sont réels. Le récepteur n° r peut donc, pour obtenir ledit vecteur de données décodées $T_{(r)}^{(l)}$ à partir du vecteur reçu $Y_{(r)}^{(l)}$, appliquer les techniques classiques utilisées en OFDM (introduction de pilotes dans la trame temps-fréquence, estimation de canal à l'aide des pilotes, démultiplexage, égalisation de canal, et ainsi de suite) - avec une simplification supplémentaire : les calculs requis par la présente invention peuvent (si on le souhaite) être effectués entièrement dans le domaine réel (pilotes réels, données réelles, canal équivalent réel), alors que les calculs requis par les techniques selon l'art antérieur doivent nécessairement être effectués dans le domaine complexe.

On notera que cette simplicité de traitement au niveau du récepteur permet d'appliquer la présente invention à des systèmes comprenant une *pluralité* de récepteurs (systèmes dits « *multi-user MIMO»* en anglais), dans lesquels, comme indiqué ci-dessus, un récepteur peut être connecté à une ou plusieurs des $N$ antennes de réception considérées (chaque antenne de réception étant bien sûr connectée à un seul récepteur). Au contraire, le procédé selon l'article de Payarô *et al.,* décrit succinctement ci-dessus, ne peut s'appliquer qu'à des systèmes comprenant un unique récepteur (systèmes dits « *single-user MIMO»* en anglais), en raison du traitement nécessairement collectif, par ce récepteur, des données reçues sur l'ensemble des antennes de réception.

A cet égard, on notera que dans le procédé de communication selon l'invention, l'étape d'extraction de la partie réelle est mise en oeuvre *avant* l'étape d'égalisation, alors que dans l'article de Payarô *et al.,* ces deux étapes sont mises en oeuvre dans l'ordre inverse.

Corrélativement, l'invention concerne un émetteur sans-fil muni de $M \geq 1$ antenne(s) d'émission, comprenant des moyens pour transmettre des données destinées à $R \geq 1$ récepteur(s) sans-fil, chaque récepteur sans-fil n° *r*, où *r* = 1, ..., *R* étant muni de $N_r$ antennes de réception, où $\sum_{r=1}^{R} N_r = N$ et $N \geq 2$, au moyen d'une modulation OFDM/OQAM comprenant $L \geq 1$ sous-porteuses, ainsi que des moyens pour obtenir, pour au moins une valeur de l'entier *l*, où $0 \leq l \leq L - 1$, une estimée $\hat{\mathbf{H}}^{(l)}$ de la matrice de transfert, de dimension $N \cdot M$, du canal MIMO entre lesdites antennes d'émission et lesdites antennes de réception. Ledit émetteur sans-fil est remarquable en ce que, pour ladite valeur de *l*, il comprend en outre des moyens pour :

- placer des données à transmettre dans un vecteur de données $X^{(l)}$ à *N* composantes réelles,
- calculer un vecteur de données codées $S^{(l)} \equiv \mathbf{W}^{(l)} \cdot X^{(l)}$ à *M* composantes, où $\mathbf{W}^{(l)}$ est une matrice de précodage de dimension $M \cdot N$ de la forme :

$$\mathbf{W}^{(l)} = \mathbf{Q} \cdot \mathfrak{R}(\hat{\mathbf{H}}^{(l)} \cdot \mathbf{P}^{(l)}),$$

où :

  ○ $\mathbf{P}^{(l)}$ est la matrice, de dimension $M \cdot N$, associée à un multiplexage spatial, R() représente l'extraction de la partie réelle, et

  ○ $\mathbf{Q} = \left(\hat{\mathbf{H}}^{(l)}\right)^{\mathbf{H}} \cdot \left[\hat{\mathbf{H}}^{(l)} \cdot \left(\hat{\mathbf{H}}^{(l)}\right)^{\mathbf{H}}\right]^{-1}$, et

- émettre ledit vecteur de données codées $S^{(l)}$ sur la sous-porteuse *l*, en émettant la *m*-ième composante, où *m* = 1,2,..., *M*, du vecteur $S^{(l)}$ à partir de la *m*-ième antenne d'émission.

L'invention concerne également un système de communication sans-fil. Ledit système est remarquable en ce qu'il comprend un émetteur sans-fil tel que décrit succinctement ci-dessus, ainsi que ledit ou lesdits *R* récepteur(s) sans-fil, et en ce que, pour ladite valeur de *l*, au moins un récepteur sans-fil n° *r*, où *r* = 1,..., *R*, comprend des moyens pour :

- recevoir lesdites données codées,
- déterminer un vecteur reçu $Y_{(r)}^{(l)}$, et
- obtenir un vecteur de données décodées $T_{(r)}^{(l)}$ à partir dudit vecteur reçu $Y_{(r)}^{(l)}$,

où le vecteur reçu $Y_{(r)}^{(l)}$ est le vecteur à $N_r$ composantes réelles dont la *n*-ième composante, où *n* = 1,2, ..., $N_r$, est égale au symbole associé à la sous-porteuse *l* reçu sur la *n*-ième antenne de réception, après démodulation OFDM/OQAM et extraction de la partie réelle.

Les avantages offerts par cet émetteur sans-fil et par ce système de communication sans-fil sont essentiellement les mêmes que ceux offerts par les procédés corrélatifs succinctement exposés ci-dessus.

On notera qu'il est possible de réaliser cet émetteur sans-fil et ces récepteurs sans-fil dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé d'émission sans-fil, ou du procédé de communication sans-fil succinctement exposés ci-dessus, lorsqu'il est exécuté sur un ordinateur.

Les avantages offerts par ce programme d'ordinateur sont essentiellement les mêmes que ceux offerts par les procédés correspondants.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :

- la figure 1a illustre une première étape d'un procédé d'émission de données selon l'état de l'art,
- la figure 1b illustre une deuxième étape d'un procédé d'émission de données selon l'état de l'art,
- la figure 1c illustre une troisième étape d'un procédé d'émission de données selon l'état de l'art,
- la figure 2 résume les étapes illustrées sur les figures 1a, 1b et 1c,
- la figure 3a illustre une première étape d'un procédé de réception de données selon l'état de l'art,
- la figure 3b illustre une deuxième étape d'un procédé de réception de données selon l'état de l'art,
- la figure 3c illustre une troisième étape d'un procédé de réception de données selon l'état de l'art,
- la figure 4 résume les étapes illustrées sur les figures 3a, 3b et 3c,
- la figure 5 représente schématiquement, selon un mode de réalisation de l'invention, le codage de vecteurs de données associés chacun à une sous-porteuse respective du multiplex OFDM/OQAM pour obtenir des vecteurs de données codées respectifs, ainsi que l'émission de la m-ième composante de ces vecteurs de données codées sur l'antenne d'émission numéro m, et
- la figure 6 représente schématiquement, selon un mode de réalisation de l'invention, la réception de symboles sur chaque antenne de réception d'un récepteur, et la détermination d'un vecteur reçu à $N$ composantes pour chaque sous-porteuse du multiplex OFDM/OQAM.

La présente invention s'applique à un système de communication sans-fil comprenant un émetteur muni de $M \geq 1$ antenne(s) d'émission, et un ou plusieurs récepteur(s) muni(s) de $N \geq 2$ antennes de réception au total. La transmission de données utilise une modulation OFDM/OQAM comprenant un nombre quelconque $L \geq 1$ de sous-porteuses.

On va d'abord rappeler le principe de la modulation OFDM/OQAM, telle qu'elle a été appliquée à des systèmes SISO (qui n'offrent donc pas la possibilité de bénéficier des avantages du multiplexage spatial).

Considérons pour commencer une modulation OFDM comportant un nombre pair $Q$ de sous-porteuses. Un signal émis s(t) transportant un symbole de données complexe en QAM (initiales des mots anglais « *Quadrature Amplitude Modulation* » signifiant « Modulation d'Amplitude en Quadrature ») par sous-porteuse et par temps-symbole $T_0 = 1/F_0$, est alors agencé de manière à ce que, pour chaque paire de sous-porteuses successives, il comporte :

- sur l'une de ces sous-porteuses, un décalage temporel (« *time offset* ») égal à $T_0/2$ sur la partie imaginaire d'un symbole QAM donné, et
- sur l'autre sous-porteuse, un même décalage temporel de $T_0/2$ sur la partie réelle du même symbole QAM.

Ce signal émis peut être écrit sous la forme

$$s(t) = \sqrt{2} \sum_{l=0}^{Q-1} \sum_{j=-\infty}^{+\infty} a_{l,j} p\left(t - j\frac{T_0}{2}\right) e^{i2\pi l F_0 t} e^{i\varphi_{l,j}}, \qquad (1)$$

où :

- l'entier $l$ numérote les sous-porteuses, et l'entier $j$ numérote les temps-symboles,
- les coefficients réels $a_{l,j}$ sont définis à partir des parties réelles et imaginaires des symboles QAM $c_{l,j}$ comme suit :

$$a_{2l',2j'} = \Re\{c_{2l',j'}\}, \ a_{2l',2j'+1} = \Im\{c_{2l',j'}\},$$

$$a_{2l'+1,2j'} = \Im\{c_{2l'+1,j'}\}, \ a_{2l'+1,2j'+1} = \Re\{c_{2l'+1,j'}\}, \qquad (2)$$

où $\Re\{...\}$ représente l'extraction de la partie réelle et $\Im\{...\}$ représente l'extraction de la partie imaginaire,
- les déphasages $\varphi_{l,j}$ valent :

$$\varphi_{2l',2j'} = 0, \varphi_{2l',2j'+1} = \frac{\pi}{2}, \varphi_{2l'+1,2j'} = \frac{\pi}{2}, \varphi_{2l'+1,2j'+1} = 0 \text{ , et} \qquad (3)$$

- la « fonction prototype *» p(t)* est réelle et symétrique.

Dans l'article de B. Le Floch, M. Alard et C. Berrou intitulé « Coded Orthogonal Frequency Division Multiplex » (Proc. IEEE, vol. 83, pages 982 à 996, juin 1995), qui décrit une catégorie de modulations comprenant, entre autres, l'OFDM/OQAM, la fonction prototype *p(t)* est choisie de manière à ce que sa transformée de Fourier soit nulle en-dehors d'une bande de fréquences de largeur $2F_0$.

Dans l'article de P. Siohan, C. Siclet, et N. Lacaille intitulé « Analysis and Design of OFDM/OQAM Systems Based on Filterbank Theory » (IEEE Transactions on Signal Processing, vol. 50 n° 5, pages 1170 à 1183, mai 2002), la fonction prototype *p(t)* est choisie de manière à être nulle en-dehors de l'intervalle temporel $\left[-\frac{\lambda T_0}{2Q}, +\frac{\lambda T_0}{2Q}\right]$, où $\lambda$ est un quelconque entier strictement positif ; si l'on discrétise le temps t en intervalles de longueur $\frac{T_0}{Q}$ (durée moyenne d'échantillonnage par symbole QAM) numérotés par l'entier *k,* le support de la fonction-prototype *p[k]* discrétisée est donc de longueur $\lambda$.

Siohan, Siclet et Lacaille démontrent que, pour obtenir une transmission OFDM/OQAM sans interférences entres symboles ou entre sous-porteuses, la fonction prototype *p(t)* doit satisfaire la relation, dite « relation d'orthogonalité », suivante :

$$G_l(z)G_l^*(z^{-1}) + G_{l+Q/2}(z)G_{l+Q/2}^*(z^{-1}) = \frac{1}{Q} \quad \text{pour } 0 \le l \le \frac{Q}{2} - 1, \qquad (4)$$

où l'astérisque désigne la conjugaison complexe, et les transformées-z

$$G_l(z) \equiv \sum_k z^{-k} p[l + kQ] \qquad (5)$$

sont appelées « composantes polyphases d'ordre *Q* » de la fonction prototype *p[k].*

Siohan, Siclet et Lacaille démontrent également que la modulation OFDM/OQAM peut être avantageusement mise en oeuvre au moyen d'une IFFT, et la démodulation OFDM/OQAM peut être avantageusement mise en oeuvre au moyen d'une FFT.

Pour ce faire, le signal discrétisé

$$s[k] \equiv \sqrt{\frac{T_0}{Q}}\, s\left(\left(k - \frac{\lambda-1}{2}\right)\frac{T_0}{Q}\right)$$

$$= \sqrt{2} \sum_{l=0}^{Q-1} \sum_{j=-\infty}^{+\infty} a_{l,j}\, p\left[k - \frac{jQ}{2}\right] e^{i\frac{2\pi}{Q}l\left(k - \frac{\lambda-1}{2}\right)} e^{i\varphi_{l,j}} \qquad (6)$$

est réécrit sous la forme

$$s[k] = \sum_{l=0}^{Q-1} \sum_{j=-\infty}^{+\infty} x_l^0[j] f_l\left[k - \frac{jQ}{2}\right], \text{ où} \qquad (7)$$

$$x_l^0[j] = a_{l,j} e^{i\frac{\pi}{2}j}, \text{ et } f_l[k] = \sqrt{2} p[k] e^{i\frac{2\pi}{Q}l\left(k - \frac{\lambda-1}{2} + \frac{Q}{4}\right)}, \qquad (8)$$

afin de présenter ce signal comme une somme classique de *Q* signaux entrants $x_l^0[j]$ filtrés respectivement par un ensemble de *Q* filtres $f_l\left[k - \frac{jQ}{2}\right]$ appartenant à une « banque de filtres de synthèse » *f[k].*

Après quelques calculs, il apparaît que la modulation/émission OFDM/OQAM consiste essentiellement à appliquer durant chaque temps-symbole numéro *j* à un vecteur entrant $[a_{0,j} \cdots a_{l,j} \ldots a_{Q-1,j}]^T$ (où l'exposant « *T* » désigne la transposition) les opérations suivantes :

- chaque composante au est multipliée par un facteur, dit de « prémodulation », égal à

$$e^{i\frac{\pi}{2}j}\; Q\sqrt{2}e^{i\frac{2\pi}{Q}l\left(k-\frac{\lambda-1}{2}+\frac{Q}{4}\right)} \; ,$$

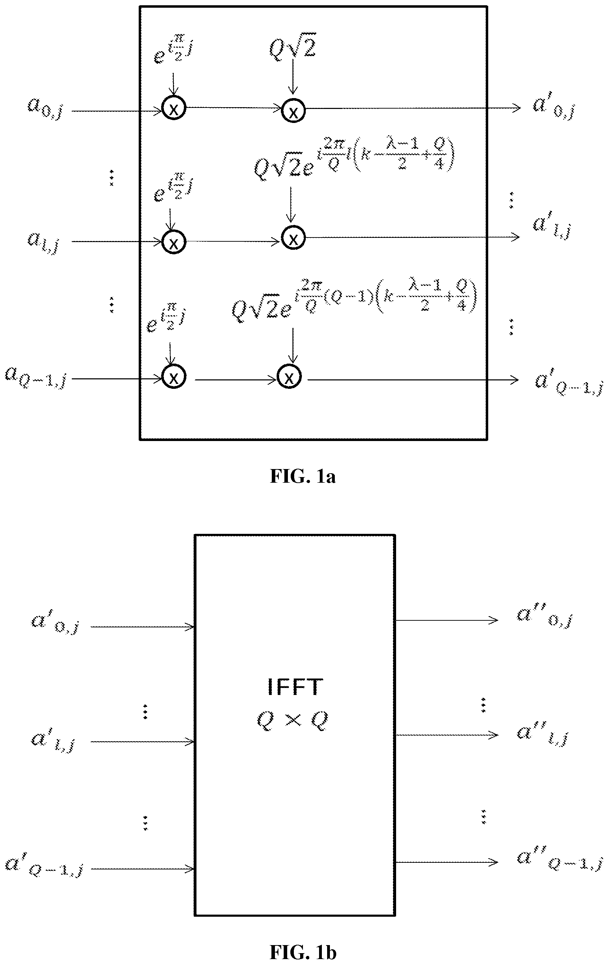

ce qui donne un vecteur $[a'_{0,j} \cdots a'_{l,j} \cdots a'_{Q-1,j}]^T$ **(figure 1a)**,

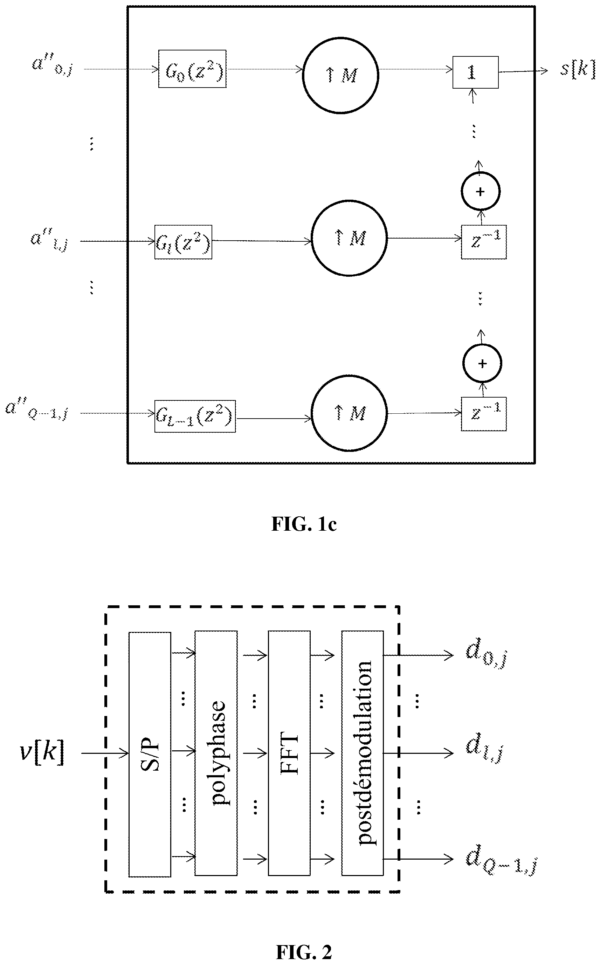

- ce vecteur $[a'_{0,j} \cdots a'_{l,j} \cdots a'_{Q-1,j}]^T$ est soumis à une IFFT de dimension $Q \cdot Q$, ce qui donne un vecteur $[a''_{0,j} \cdots a''_{l,j} \cdots a''_{Q-1,j}]^T$ **(figure 1b)**,
- chaque composante $a''_{l,j}$ de ce vecteur $[a''_{0,j} \cdots a''_{l,j} \ldots a''_{Q-1,j}]^T$ est soumise à un filtrage $G_l(z^2)$, puis à une expansion de facteur $Q/2$, et enfin (sauf pour $l = 0$) à un retard de facteur $z^{-1}$ par rapport à la composante $a''_{l-1,j}$ ; pour terminer, les signaux résultants sont sommés (transformation parallèle → série, notée P/S) pour donner le signal $s[k]$ **(figure 1c)**.

La **figure 2** résume les étapes de modulation/émission d'un multiplex OFDM/OQAM décrites succinctement ci-dessus.

On peut appliquer un traitement analogue au signal reçu $v[k]$. Le signal démodulé $y_l[j]$ sortant sur la sous-porteuse numéro $l$ au temps-symbole numéro $j$ peut être écrit sous la forme

$$y_l[j] = \sum_{k=-\infty}^{+\infty} v[k]h_l\left[\frac{jQ}{2} - k\right], \text{ où} \tag{9}$$

$$h_l[k] = \sqrt{2}p[k]e^{i\frac{2\pi}{Q}l\left(k-\frac{\lambda-1}{2}-\frac{Q}{4}\right)}, \tag{10}$$

de manière à faire apparaître que le signal reçu $v[k]$ est filtré par un ensemble de $Q$ filtres $h_l\left[\dfrac{jQ}{2} - k\right]$ appartenant à une « banque de filtres d'analyse » $h_l[k]$.

Après quelques calculs, il apparaît que la réception/démodulation OFDM/OQAM consiste essentiellement à appliquer au signal reçu $v[k]$ durant chaque temps-symbole numéro $j$ les opérations suivantes :

- application d'un retard de facteur $z^{-\beta}$, où $\beta$ est l'entier tel que

$$\beta \equiv \frac{\alpha Q}{2} - \lambda + 1 \text{ , avec } 0 \le \beta \le \frac{Q}{2} - 1 \text{ et } \alpha > 0 \text{ entier,} \tag{11}$$

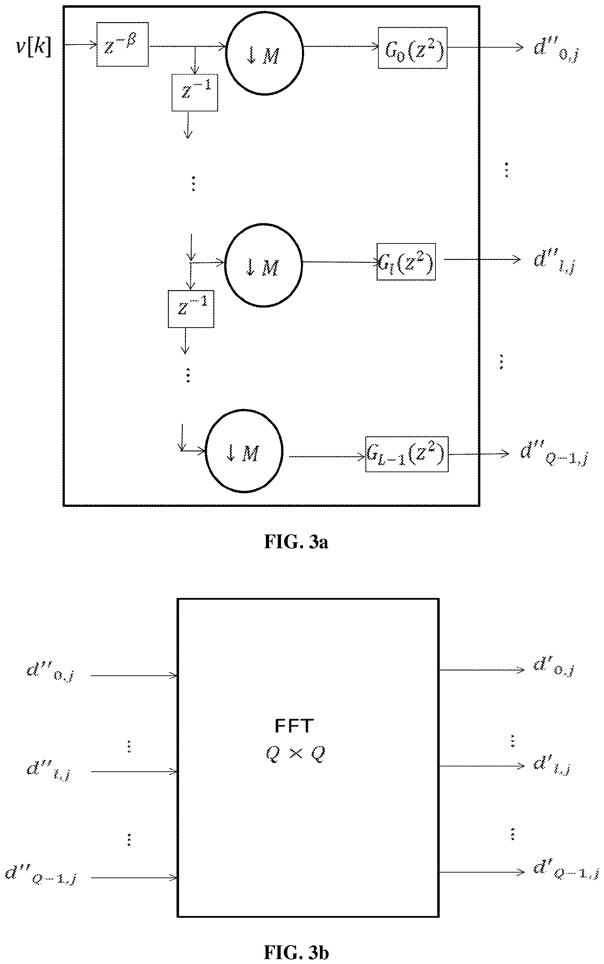

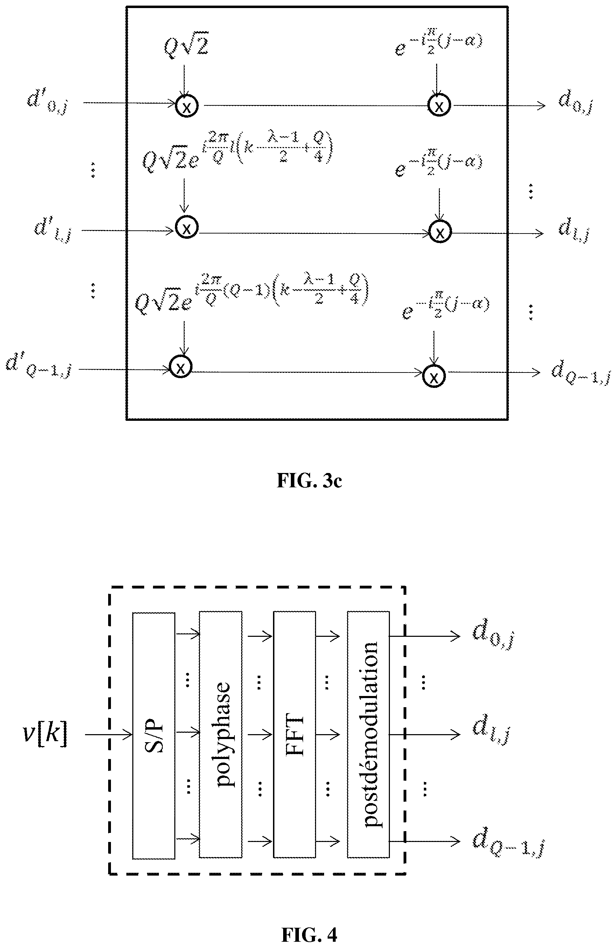

puis décomposition du signal ainsi obtenu en une somme de $Q$ composantes (transformation série → parallèle, notée S/P), chacune de ces composantes (sauf pour $l = 0$) étant d'abord soumise à un retard de facteur $z^{-1}$ par rapport à la composante précédente, puis décimée d'un facteur $Q/2$, et enfin soumise à un filtrage $G_l(z^2)$ pour donner la composante $d''_{l,j}$ d'un vecteur $[d''_{0,j} \cdots d''_{l,j} \cdots d''_{Q-1,j}]^T$ **(figure 3a)**,

- ce vecteur $[d''_{0,j} \cdots d''_{l,j} \cdots d''_{Q-1,j}]^T$ est soumis à une FFT de dimension $Q \cdot Q$, ce qui donne un vecteur $[d'_{0,j} \cdots d'_{l,j} \cdots d'_{Q-1,j}]^T$ **(figure 3b)**,
- chaque composante $d'_{l,j}$ de ce vecteur $[d'_{0,j} \cdots d'_{l,j} \cdots d'_{Q-1,j}]^T$ est multipliée par un facteur, dit de « postdémodulation », égal à

$$Q\sqrt{2}e^{i\frac{2\pi}{Q}l\left(k-\frac{\lambda-1}{2}+\frac{Q}{4}\right)}e^{-i\frac{\pi}{2}(j-\alpha)} \; ,$$

ce qui donne finalement la composante, réelle, $d_{l,j}$ du vecteur

$$[d_{0,j} \quad \ldots \quad d_{l,j} \quad \ldots \quad d_{Q-1,j}]^T$$

(**figure 3c**)

La **figure 4** résume les étapes de réception/démodulation d'un multiplex OFDM/OQAM décrites succinctement ci-dessus.

On notera pour terminer, sur la base de l'équation (2) ci-dessus, que si l'on choisit systématiquement des valeurs nulles pour les symboles QAM correspondant à un numéro de sous-porteuse $l$ pair, alors il est inutile de prendre en compte les sous-porteuses de numéro pair, et si l'on choisit systématiquement des valeurs nulles pour les symboles QAM correspondant à un numéro de sous-porteuse $l$ impair, alors il est inutile de prendre en compte les sous-porteuses de numéro impair. Ainsi, dans ces deux cas, le nombre effectif de sous-porteuses est $Q/2$, lequel peut être pair ou impair. On voit donc que le nombre de sous-porteuses (désigné par $L$ dans le cadre de la présente invention) utilisé pour mettre en oeuvre une modulation OFDM/OQAM peut être aussi bien pair qu'impair.

On va décrire à présent un procédé d'émission de données selon un mode de réalisation de l'invention, dans lequel on transmet des données codées sur chacune des $L$ sous-porteuses d'un multiplex OFDM/OQAM. En variante, on pourrait ne prendre en compte que l'une, ou un sous-ensemble, de ces sous-porteuses.

Dans ce mode de réalisation, l'émetteur connaît, pour chaque entier $l$, où $0 \leq l \leq L$ - 1, une estimée $\hat{\mathbf{H}}^{(l)}$ de la matrice de transfert du canal MIMO associé à cette sous-porteuse. Cette estimée peut être obtenue par n'importe quel moyen connu. Par exemple, en mode FDD (« *Frequency Division Multiplexing* »), l'estimation peut être effectuée par le récepteur, qui transmet ensuite l'estimée à l'émetteur ; en mode TDD (« *Time Division Multiplexing*»), l'émetteur peut effectuer directement cette estimation à partir de signaux pilotes émis par le récepteur.

On supposera que la matrice hermitienne $\left[\hat{\mathbf{H}}^{(l)} \cdot \left(\hat{\mathbf{H}}^{(l)}\right)^{\mathbf{H}}\right]$, où l'exposant « **H** » désigne la transposition-conjugaison complexe, est inversible (ce qui est généralement le cas en pratique).

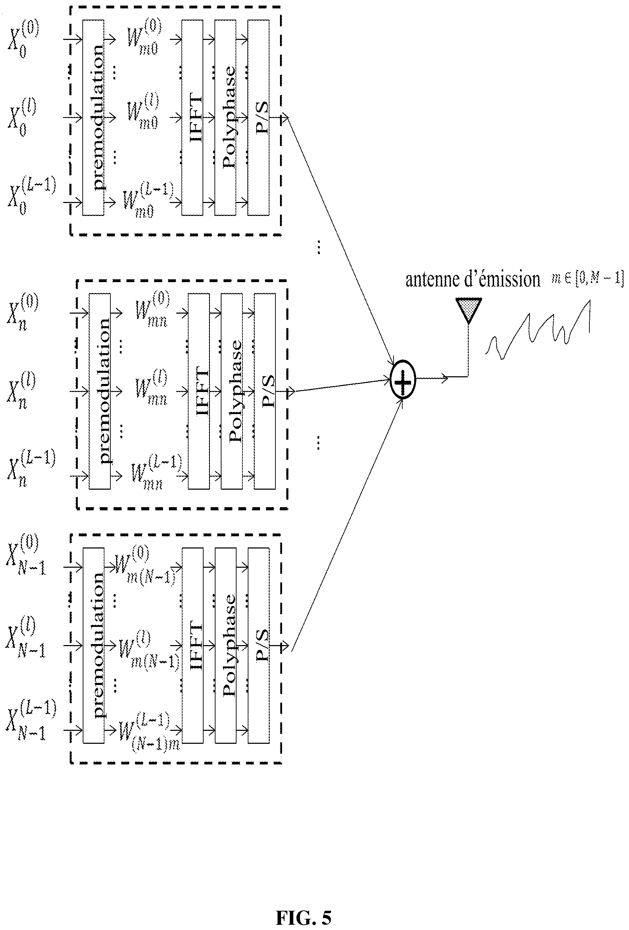

L'émetteur met en oeuvre les étapes suivantes, illustrées sur la **figure 5.**

Lors d'une étape E1, l'émetteur place des données à transmettre dans un vecteur de données $X^{(l)}$ à $N$ composantes réelles.

Lors d'une étape E2, l'émetteur calcule un vecteur de données codées $S^{(l)} \equiv \mathbf{W}^{(l)} \cdot X^{(l)}$ à $M$ composantes, où $\mathbf{W}^{(l)}$ est une matrice de précodage de dimension $M \cdot N$ choisie comme suit :

$$\mathbf{W}^{(l)} = \mathbf{Q} \cdot \mathfrak{R}(\hat{\mathbf{H}}^{(l)} \cdot \mathbf{P}^{(l)}), \tag{12}$$

où :

 ◦ $\mathbf{P}^{(l)}$ est la matrice, de dimension $M \cdot N$, associée à un multiplexage spatial, et

 ◦ $\mathbf{Q} = \left(\hat{\mathbf{H}}^{(l)}\right)^{\mathbf{H}} \cdot \left[\hat{\mathbf{H}}^{(l)} \cdot \left(\hat{\mathbf{H}}^{(l)}\right)^{\mathbf{H}}\right]^{-1}$ est la matrice connue de l'Homme du Métier sous le nom de « matrice de précodage de Zero-Forcing ».

Ce multiplexage spatial peut être réalisé selon toute méthode connue, avec les avantages et les inconvénients respectifs, connus eux aussi, de chacune de ces méthodes. On trouvera plus bas, à titre d'exemples, deux variantes possibles pour le multiplexage spatial.

Enfin, lors d'une étape E3, l'émetteur émet le vecteur de données codées $S^{(l)}$ sur la sous-porteuse $l$ simultanément sur toutes les antennes émettrices, en émettant la $m$-ième composante, où $m = 1,2, ..., M$, du vecteur $S^{(l)}$ à partir de la $m$-ième antenne d'émission.

On va décrire à présent un procédé de communication selon un mode de réalisation de l'invention, dans lequel au moins un récepteur obtient des données décodées associées à chacune des $L$ sous-porteuses. En variante, on pourrait ne prendre en compte que l'une, ou un sous-ensemble, de ces sous-porteuses.

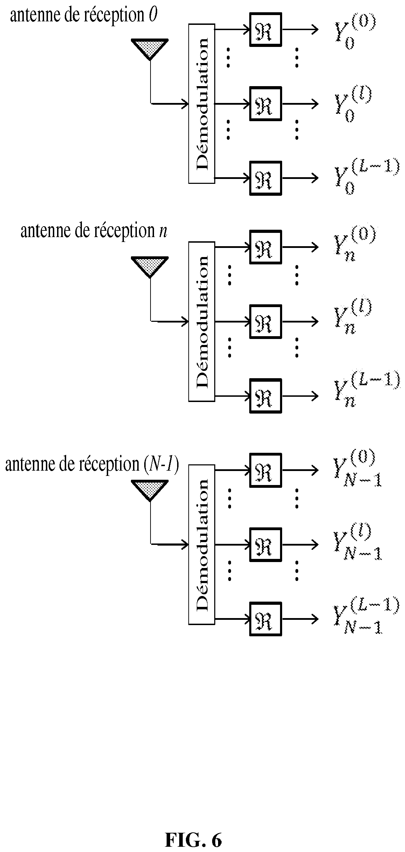

A titre d'exemple, on supposera que le système de communication considéré ne comprend qu'un seul récepteur (autrement dit, $R = 1$) ; pour simplifier les notations, on omettra ci-dessous, ainsi que sur la figure 6, l'indice (1) correspondant à $r = 1$. Ce mode de réalisation peut facilement être généralisé au cas de systèmes de communication comprenant une pluralité de récepteurs, dans lesquels chaque récepteur n° $r$, où $r = 1, ..., R$ est muni de $N_r$ antennes de réception,

avec $\sum_{r=1}^{R} Nr = N.$

Dans le présent mode de réalisation, le récepteur, de manière synchronisée avec les étapes, décrites ci-dessus, mises en oeuvre par l'émetteur, met en oeuvre les étapes suivantes.

Lors d'une étape R1, illustrée sur la **figure 6,** le récepteur détermine un vecteur reçu $Y^{(l)}$ à $N$ composantes réelles, dont la $n$-ième composante, où $n = 1,2, ..., N$, est égale au symbole associé à la sous-porteuse $l$ reçu sur la $n$-ième antenne de réception, après démodulation OFDM/OQAM et extraction de la partie réelle.

Or le signal $V^{(l)}$ reçu après démodulation OFDM/OQAM est tel que

$$\Re\{V^{(l)}\} \approx \mathbf{G}^{(l)}X^{(l)}, \text{ où } \mathbf{G}^{(l)} = \mathbf{H}^{(l)}\mathbf{W}^{(l)} . \tag{13}$$

On peut montrer facilement que :

$$\mathbf{G}^{(l)} \approx \Re(\widehat{\mathbf{H}}^{(l)}\mathbf{P}^{(l)}) \tag{14}$$

(en supposant naturellement que l'estimation de $\mathbf{H}^{(l)}$ contenue dans $\mathbf{W}^{(l)}$ est fiable). La matrice $\mathbf{G}^{(l)}$ est donc réelle. Par conséquent :

$$Y^{(l)} \approx \mathbf{G}^{(l)}X^{(l)} + U^{(l)}, \tag{15}$$

où $U^{(l)}$ est un bruit réel. Vu l'équation (15), la matrice $\mathbf{G}^{(l)}$ est appelée « matrice du canal équivalent » associée au précodage par $\mathbf{W}^{(l)}$.

Lors d'une étape R2, le récepteur obtient un vecteur de données décodées $T^{(l)}$ en appliquant audit vecteur reçu $Y^{(l)}$ un traitement adéquat, par exemple un démultiplexage spatial et une égalisation selon les techniques classiques utilisées en OFDM ; avantageusement, le récepteur n'a nul besoin, pour ce faire, de traiter les interférences entre symboles spécifiques à l'OFDM/OQAM.

On va décrire pour terminer deux variantes possibles pour le multiplexage spatial mis en oeuvre à l'étape E2 ci-dessus.

Selon une première variante, on utilise pour ce faire un précodeur MMSE:

$$\mathbf{P}^{(l)} = \left(\widehat{\mathbf{H}}^{(l)}\right)^{\mathbf{H}} \left(\widehat{\mathbf{H}}^{(l)}\left(\widehat{\mathbf{H}}^{(l)}\right)^{\mathbf{H}} + \frac{1}{SNR}\mathbf{I}\right)^{-1}, \tag{16}$$

où I désigne la matrice identité, et $SNR$ l'estimation, supposée connue par l'émetteur, du Rapport Signal-sur-Bruit (« $Signal\ over\ Noise\ Ratio$ » en anglais) du récepteur, c'est-à-dire le rapport entre la puissance reçue (sans précodage) par le récepteur moyennée sur les antennes de réception et le bruit du récepteur.

On rappelle qu'en théorie le précodeur optimal pour un système dont la contrainte est de transmettre un flux par antenne de réception est le précodeur MMSE (initiales des mots anglais « $Minimum\ Mean$-$Square\ Error$» signifiant « Erreur Quadratique Moyenne Minimale »).

L'avantage de cette première variante est qu'elle permet d'obtenir, à fort $SNR,$ un meilleur débit somme sur les antennes que les autres variantes. En revanche, l'efficacité du précodeur MMSE repose sur une estimation et une prédiction précises du $SNR$ ; or cette estimation est difficile à réaliser, de sorte qu'en pratique une mauvaise estimation du $SNR$ (appelée « $SNR\ mismatch$ » dans la littérature en anglais) empêche d'obtenir les performances attendues.

Selon une deuxième variante, on utilise un précodeur à retournement temporel :

$$\mathbf{P}^{(l)} = \left(\widehat{\mathbf{H}}^{(l)}\right)^{\mathbf{H}}. \tag{17}$$

On rappelle à cet égard qu'un signal radio émis par une antenne d'émission subit des déformations en fonction des conditions de propagation entre cette antenne d'émission et une antenne de réception. Afin de limiter ces déformations, le signal est préalablement distordu par application de coefficients dits de « précodage », en fonction des caractéristiques du canal de propagation entre ces deux antennes. Il est donc nécessaire, pour ce faire, de déterminer les caractéristiques de ce canal de propagation dans la bande de fréquences concernée.

Parmi les méthodes de précodage existantes, on distingue les méthodes mettant en oeuvre la technique dite du « Retournement Temporel », du fait de sa complexité réduite, de ses performances et de sa capacité intrinsèque à focaliser une onde radio sur une antenne de réception. Le Retournement Temporel permet de réduire significativement la dispersion causée par le canal de propagation en focalisant l'énergie du signal transmis dans le temps et dans l'espace.

Le Retournement Temporel est une technique (à l'origine utilisée dans le domaine des ondes acoustiques) qui repose sur l'invariance par renversement du temps de l'équation d'onde. Ainsi, une onde temporellement inversée se propage comme une onde directe qui remonterait le temps. Lorsqu'une impulsion brève émise par un point d'origine se propage dans un milieu de propagation, et qu'une partie de cette onde reçue par un point destinataire est retournée temporellement avant d'être renvoyée dans le milieu de propagation, l'onde converge vers le point d'origine en y reformant une impulsion brève. Le signal recueilli au point d'origine est quasi-identique dans sa forme au signal d'origine émis par le point d'origine.

La technique du Retournement Temporel a été appliquée aux réseaux de communication radio pour annuler l'effet du canal de propagation sur le signal reçu par une antenne réceptrice, notamment en réduisant l'étalement du canal par concentration de l'énergie en un point focal où se trouve cette antenne réceptrice et en réduisant l'étalement temporel (« *delay spread* » en anglais) du signal reçu, ainsi que pour simplifier le traitement de symboles reçus après la traversée du canal. Pour ce faire, le signal émis par une antenne émettrice est pré-égalisé par application de coefficients obtenus à partir du retournement temporel de la réponse impulsionnelle du canal de propagation que ce signal doit traverser.

En vertu de l'équation (14) ci-dessus, la matrice du canal équivalent vaut, dans le cas de cette deuxième variante :

$$\mathbf{G}^{(l)} \approx \Re(\hat{\mathbf{H}}^{(l)}(\hat{\mathbf{H}}^{(l)})^{\mathbf{H}}). \qquad (18)$$

Or $\hat{\mathbf{H}}^{(l)}(\hat{\mathbf{H}}^{(l)})^{\mathbf{H}}$ est une matrice hermitienne, donc :

- ses coefficients diagonaux sont déjà réels, et
- ses coefficients non-diagonaux sont, *a priori,* complexes.

D'où les avantages suivants :

- la matrice $\mathbf{G}^{(l)}$ a pour coefficients diagonaux les mêmes coefficients que la matrice $\hat{\mathbf{H}}^{(l)}(\hat{\mathbf{H}}^{(l)})^{\mathbf{H}}$, ce qui implique que l'opération d'extraction de la partie réelle selon l'équation (18) ci-dessus conserve la totalité de la puissance utile ;

- $\mathbf{G}^{(l)}$ a pour coefficients non-diagonaux la partie réelle des coefficients non-diagonaux de $\hat{\mathbf{H}}^{(l)}(\hat{\mathbf{H}}^{(l)})^{\mathbf{H}}$, ce qui implique que l'opération d'extraction de la partie réelle réduit (en ne prélevant que la partie réelle des termes non-diagonaux) les interférences entre flux résultant du multiplexage spatial ; et
- il est connu que, de tous les précodages, le retournement temporel est celui qui maximise les termes diagonaux (c'est le filtre adapté à l'émission), et donc la partie utile du canal équivalent.

Comme mentionné ci-dessus, la présente invention concerne également un système informatique mettant en oeuvre le procédé d'émission sans-fil, ou le procédé de communication sans-fil décrits ci-dessus. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés selon l'invention.

En effet, l'invention vise aussi un programme d'ordinateur téléchargeable depuis un réseau de communication comprenant des instructions pour l'exécution des étapes d'un procédé selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés selon l'invention.

**Revendications**

1. Procédé d'émission sans-fil, par un émetteur sans-fil muni de $M \geq 1$ antenne(s) d'émission, de données destinées à $R \geq 1$ récepteur(s) sans-fil, chaque récepteur sans-fil n° r, où r = 1, ..., R étant muni *de* $N_r$ antennes de réception, où $\sum_{r=1}^{R} N_r = N$ et $N \geq 2$, dans lequel lesdites données sont transmises au moyen d'une modulation OFDM/OQAM comprenant $L \geq 1$ sous-porteuses, ledit procédé comprenant, pour au moins une valeur de l'entier *l,* où $0 \leq l \leq L - 1,$ une étape préalable d'obtention d'une estimée $\hat{\mathbf{H}}^{(l)}$ de la matrice de transfert, de dimension $N \cdot M$, du canal MIMO entre lesdites antennes d'émission et lesdites antennes de réception, et pour ladite valeur de *l*, comprenant en outre les étapes suivantes :

   - placement (E1) de données à transmettre dans un vecteur de données $X^{(l)}$ à $N$ composantes réelles,
   - calcul (E2) d'un vecteur de données codées $S^{(l)} \equiv \mathbf{W}^{(l)} \cdot X^{(l)}$ à $M$ composantes, où $\mathbf{W}^{(l)}$ est une matrice de précodage de dimension $M \cdot N$ de la forme :

$$\mathbf{W}^{(l)} = \mathbf{Q} \cdot \Re(\hat{\mathbf{H}}^{(l)} \cdot \mathbf{P}^{(l)}),$$

   où :

   ∘ $\mathbf{P}^{(l)}$ est la matrice, de dimension $M \cdot N,$ associée à un multiplexage spatial, R() représente l'extraction de la partie réelle, et

   ∘ $\mathbf{Q} = \left(\hat{\mathbf{H}}^{(l)}\right)^{\mathbf{H}} \cdot \left[\hat{\mathbf{H}}^{(l)} \cdot \left(\hat{\mathbf{H}}^{(l)}\right)^{\mathbf{H}}\right]^{-1},$ et

   - émission (E3) dudit vecteur de données codées $S^{(l)}$ sur la sous-porteuse *l,* en émettant la *m*-ième composante, où m = 1,2, ..., M, du vecteur $S^{(l)}$ à partir de la *m*-ième antenne d'émission.

2. Procédé d'émission sans-fil selon la revendication 1, **caractérisé en ce que** ledit multiplexage spatial est réalisé au moyen du précodeur MMSE suivant :

$$\mathbf{P}^{(l)} = \left(\hat{\mathbf{H}}^{(l)}\right)^{\mathbf{H}} \left(\hat{\mathbf{H}}^{(l)}\left(\hat{\mathbf{H}}^{(l)}\right)^{\mathbf{H}} + \frac{1}{SNR}\mathbf{I}\right)^{-1}.$$

3. Procédé d'émission sans-fil selon la revendication 1, **caractérisé en ce que** ledit multiplexage spatial est réalisé au moyen du précodeur à retournement temporel suivant :

$$\mathbf{P}^{(l)} = \left(\hat{\mathbf{H}}^{(l)}\right)^{\mathbf{H}}.$$

4. Procédé de communication sans-fil, comprenant les étapes d'un procédé d'émission selon l'une quelconque des revendications 1 à 3, et pour ladite valeur de *l*, au moins un récepteur sans-fil n°r, où *r* = 1*, ..., R,* qui met en oeuvre les étapes suivantes :

   - réception desdites données codées,

- détermination (R1) d'un vecteur reçu $Y_{(r)}^{(l)}$, et

- obtention (R2) d'un vecteur de données décodées $T_{(r)}^{(l)}$ à partir dudit vecteur reçu $Y_{(r)}^{(l)}$,

où le vecteur reçu $Y_{(r)}^{(l)}$ est le vecteur à $N_r$ composantes réelles dont la $n$-ième composante, où $n = 1,2,..., N_r$, est égale au symbole associé à la sous-porteuse $l$ reçu sur la $n$-ième antenne de réception, après démodulation OFDM/OQAM et extraction de la partie réelle.

**5.** Emetteur sans-fil muni de $M \geq 1$ antenne(s) d'émission, comprenant des moyens pour transmettre des données destinées à $R \geq 1$ récepteur(s) sans-fil, chaque récepteur sans-fil n° r, où r = 1, ..., $R$ étant muni *de* $N_r$ antennes de réception, où $\sum_{r=1}^{R} N_r = N$ et $N \geq 2$, au moyen d'une modulation OFDM/OQAM comprenant $L \geq 1$ sous-porteuses, ainsi que des moyens pour obtenir, pour au moins une valeur de l'entier $l$, où $0 \leq l \leq L - 1$, une estimée $\hat{\mathbf{H}}^{(l)}$ de la matrice de transfert, de dimension $N \cdot M$, du canal MIMO entre lesdites antennes d'émission et lesdites antennes de réception, et pour ladite valeur de $l$, comprenant en outre des moyens pour :

- placer des données à transmettre dans un vecteur de données $X^{(l)}$ à $N$ composantes réelles,
- calculer un vecteur de données codées $S^{(l)} \equiv \mathbf{W}^{(l)} \cdot X^{(l)}$ à $M$ composantes, où $\mathbf{W}^{(l)}$ est une matrice de précodage de dimension $M \cdot N$ de la forme :

$$\mathbf{W}^{(l)} = \mathbf{Q} \cdot \mathfrak{R}(\hat{\mathbf{H}}^{(l)} \cdot \mathbf{P}^{(l)}),$$

où :

∘ $\mathbf{P}^{(l)}$ est la matrice, de dimension $M \cdot N$, associée à un multiplexage spatial, R() représente l'extraction de la partie réelle, et

∘ $\mathbf{Q} = (\hat{\mathbf{H}}^{(l)})^{\mathbf{H}} \cdot \left[ \hat{\mathbf{H}}^{(l)} \cdot (\hat{\mathbf{H}}^{(l)})^{\mathbf{H}} \right]^{-1},$ et

- émettre ledit vecteur de données codées $S^{(l)}$ sur la sous-porteuse $l$, en émettant la $m$-ième composante, où $m = 1,2, ... , M$, du vecteur $S^{(l)}$ à partir de la $m$-ième antenne d'émission.

**6.** Emetteur sans-fil selon la revendication 5, **caractérisé en ce que** ledit multiplexage spatial est réalisé au moyen du précodeur MMSE suivant :

$$\mathbf{P}^{(l)} = (\hat{\mathbf{H}}^{(l)})^{\mathbf{H}} \left( \hat{\mathbf{H}}^{(l)}(\hat{\mathbf{H}}^{(l)})^{\mathbf{H}} + \frac{1}{SNR}\mathbf{I} \right)^{-1}.$$

**7.** Emetteur sans-fil selon la revendication 5, **caractérisé en ce que** ledit multiplexage spatial est réalisé au moyen du précodeur à retournement temporel suivant :

$$\mathbf{P}^{(l)} = (\hat{\mathbf{H}}^{(l)})^{\mathbf{H}}.$$

**8.** Système de communication sans-fil, comprenant un émetteur sans-fil selon l'une quelconque des revendications 5 à 7, ainsi que ledit ou lesdits $R$ récepteur(s) sans-fil, et pour ladite valeur de $l$, au moins un récepteur sans-fil n° $r$, où $r = 1, ..., R$, qui comprend des moyens pour :

- recevoir lesdites données codées,
- déterminer un vecteur reçu $Y_{(r)}^{(l)}$, et

- obtenir un vecteur de données décodées $T_{(r)}^{(l)}$ à partir dudit vecteur reçu $Y_{(r)}^{(l)}$,

où le vecteur reçu $Y_{(r)}^{(l)}$ est le vecteur à $N_r$ composantes réelles dont la *n*-ième composante, où $n$ = 1,2, ..., $N_r$, est égale au symbole associé à la sous-porteuse *l* reçu sur la *n*-ième antenne de réception, après démodulation OFDM/OQAM et extraction de la partie réelle.

**9.** Moyen de stockage de données inamovible, ou partiellement ou totalement amovible, comportant des instructions de code de programme informatique pour l'exécution des étapes d'un procédé d'émission sans-fil selon l'une quelconque des revendications 1 à 3, ou d'un procédé de communication sans-fil selon la revendication 4.

**10.** Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé d'émission sans-fil selon l'une quelconque des revendications 1 à 3, ou d'un procédé de communication sans-fil selon la revendication 4.

**Patentansprüche**

**1.** Verfahren zum drahtlosen Senden durch einen drahtlosen Sender, der mit $M \geq 1$ Sendeantennen ausgestattet ist, von Daten, die für $R \geq 1$ drahtlose Empfänger bestimmt sind, wobei jeder drahtlose Empfänger n° *r*, wobei r = 1, ... , *R* ist, mit $N_r$ Empfangsantennen ausgestattet ist, wobei $\sum_{r=1}^{R} N_r = N$ und $N \geq 2$ ist, wobei die Daten mittels einer OFDM/OQAM-Modulation übertragen werden, die $L \geq 1$ Subträger aufweist, wobei das Verfahren für mindestens einen Wert der Ganzzahl *1*, wobei $0 \leq l \leq L$ -1 ist, einen vorhergehenden Schritt des Erhaltens von einer Schätzung $\hat{H}^{(l)}$ der Übertragungsmatrix der Dimension $N \cdot M$ des MIMO-Kanals zwischen den Sendeantennen und den Empfangsantennen aufweist, und für den Wert von *1* ferner die folgenden Schritte aufweist:

- Platzieren (E1) von zu übertragenden Daten in einen Datenvektor $X^{(l)}$ mit $N$ realen Komponenten,
- Berechnen (E2) eines Vektors mit codierten Daten $S^{(l)} \equiv W^{(l)} \cdot X^{(l)}$ mit $M$ Komponenten, wobei $W^{(l)}$ eine vorkodierungsmatrix der Dimension $M \cdot N$ der Form:

$$\mathbf{W^{(l)}} = \mathbf{Q} \cdot \Re(\hat{\mathbf{H}}^{(l)} \cdot \mathbf{P^{(l)}})$$

ist, wobei:

   ∘ $\mathbf{P^{(l)}}$ die Matrix der Dimension $M \cdot N$ ist, die einer räumlichen Multiplexierung zugeordnet ist, $\Re( )$ die Extraktion des realen Teils darstellt, und

$$\mathbf{Q} = \left(\hat{\mathbf{H}}^{(l)}\right)^{\mathbf{H}} \cdot \left[\hat{\mathbf{H}}^{(l)} \cdot \left(\hat{\mathbf{H}}^{(l)}\right)^{\mathbf{H}}\right]^{-1}$$

   ∘     , und

- Senden (E3) des Vektors mit verschlüsselten Daten $S^{(l)}$ auf dem Subträger *1*, indem die *m*-te Komponente, wobei $m$ = 1,2, ..., $M$ ist, des Vektors $S^{(l)}$ ausgehend von der *m*-ten Sendeantenne gesendet wird.

**2.** Verfahren zum drahtlosen Senden nach Anspruch 1, **dadurch gekennzeichnet, dass** die räumliche Multiplexierung durch einen MMSE-Vorcodierer durchgeführt wird nach:

$$\mathbf{P^{(l)}} = \left(\hat{\mathbf{H}}^{(l)}\right)^{\mathbf{H}} \left(\hat{\mathbf{H}}^{(l)}\left(\hat{\mathbf{H}}^{(l)}\right)^{\mathbf{H}} + \frac{1}{SNR}\mathbf{I}\right)^{-1}.$$

**3.** Verfahren zum drahtlosen Senden nach Anspruch 1, **dadurch gekennzeichnet, dass** die räumliche Multiplexierung durch einen Vorcodierer mit zeitlicher Umkehrung durchgeführt wird nach:

$$\mathbf{P}^{(\mathbf{l})} = \left(\hat{\mathbf{H}}^{(\mathbf{l})}\right)^{\mathbf{H}}.$$

4. Verfahren für drahtlose Kommunikation, umfassend die Schritte eines Verfahrens zum Senden nach einem der Ansprüche 1 bis 3 und für den Wert von *1* mindestens einen drahtlosen Empfänger n° *r,* wobei *r* = 1, *... , R* ist, das die folgenden Schritte umsetzt:

- Empfangen der codierten Daten,

- Bestimmen (R1) eines empfangenen Vektors $Y^{(l)}_{(r)}$ und

- Erhalten (R2) eines Vektors von decodierten Daten $T^{(l)}_{(r)}$ ausgehend von dem empfangenen Vektor $Y^{(l)}_{(r)}$,

wobei der empfangene Vektor $Y^{(l)}_{(r)}$ oder Vektor mit $N_r$ realen Komponenten ist, dessen *n*-te Komponente, wobei *n* = 1, 2, ... , $N_r$ ist, gleich dem Symbol ist, das dem Subträger *1* zugeordnet wird, das auf der *n*-ten Empfangsantenne empfangen wird, nach OFDM/OQAM-Demodulation und Extraktion des realen Teils.

5. Drahtloser Sender, der mit $M \geq 1$ Sendeantennen ausgestattet ist, umfassend Mittel zum Senden von Daten, die für $R \geq 1$ drahtlose Empfänger bestimmt sind, wobei jeder drahtlose Empfänger n° *r*, wobei *r* = 1, ... , *R* ist, mit $N_r$ Empfangsantennen ausgestattet ist, wobei $\sum_{r=1}^{R} N_r = N$ und $N \geq 2$ ist, mittels einer OFDM/OQAM-Modulation, die $L \geq 1$ Subträger aufweist, sowie Mittel zum Erhalten für mindestens einen Wert der Ganzzahl *1*, wobei $0 \leq l \leq L$ - 1 ist, von einer Schätzung $\hat{\mathbf{H}}^{(l)}$ der Übertragungsmatrix der Dimension $N \cdot M$ des MIMO-Kanals zwischen den Sendeantennen und den Empfangsantennen und für den Wert von *1*, ferner Mittel aufweist, um:

- die zu übertragenden Daten in einen Datenvektor $X^{(l)}$ mit *N* realen Komponenten zu platzieren,
- einen Vektor mit codierten Daten $S^{(l)} \equiv \mathbf{W}^{(l)} \cdot X^{(l)}$ mit *M* Komponenten, wobei $\mathbf{W}^{(l)}$ eine Vorkodierungsmatrix der Dimension $M \cdot N$ der Form:

$$\mathbf{W}^{(\mathbf{l})} = \mathbf{Q} \cdot \mathfrak{R}(\hat{\mathbf{H}}^{(\mathbf{l})} \cdot \mathbf{P}^{(\mathbf{l})})$$

ist, wobei:

○ $\mathbf{P}^{(l)}$ die Matrix der Dimension $M \cdot N$ ist, die einer räumlichen Multiplexierung zugeordnet ist, $\mathfrak{R}( )$ die Extraktion des realen Teils darstellt, und

○ $\mathbf{Q} = \left(\hat{\mathbf{H}}^{(\mathbf{l})}\right)^{\mathbf{H}} \cdot \left[\hat{\mathbf{H}}^{(\mathbf{l})} \cdot \left(\hat{\mathbf{H}}^{(\mathbf{l})}\right)^{\mathbf{H}}\right]^{-1}$ ist, und

- den Vektor mit codierten Daten $S^{(l)}$ auf dem Subträger *1* zu senden, indem die *m*-te Komponente, wobei *m* = 1,2, ..., *M* ist, des Vektors $S^{(l)}$ ausgehend von der *m*-ten Sendeantenne gesendet wird.

6. Drahtloser Sender nach Anspruch 5, **dadurch gekennzeichnet, dass** die räumliche Multiplexierung durch einen MMSE-Vorcodierer durchgeführt wird nach:

$$\mathbf{P}^{(\mathbf{l})} = \left(\hat{\mathbf{H}}^{(\mathbf{l})}\right)^{\mathbf{H}} \left(\hat{\mathbf{H}}^{(\mathbf{l})}\left(\hat{\mathbf{H}}^{(\mathbf{l})}\right)^{\mathbf{H}} + \frac{1}{SNR}\mathbf{I}\right)^{-1}.$$

7. Drahtloser Sender nach Anspruch 5, **dadurch gekennzeichnet, dass** die räumliche Multiplexierung durch einen Vorcodierer mit zeitlicher Umkehrung durchgeführt wird nach:

$$\mathbf{P}^{(l)} = \left(\widehat{\mathbf{H}}^{(l)}\right)^{\mathrm{H}}.$$

8. System für drahtlose Kommunikation, umfassend einen drahtlosen Sender nach einem der Ansprüche 5 bis 7 sowie den oder die $R$ drahtlosen Empfänger und für den Wert von 1 mindestens einen drahtlosen Empfänger n° $r$, wobei $r = 1, ... , R$ ist, der Mittel aufweist, um:

- die codierten Daten zu empfangen,
- einen empfangenen Vektor $Y_{(r)}^{(l)}$ zu bestimmen und
- einen Vektor von decodierten Daten $T_{(r)}^{(l)}$ ausgehend von dem empfangenen Vektor $Y_{(r)}^{(l)}$ zu erhalten,

wobei der empfangene Vektor $Y_{(r)}^{(l)}$ der Vektor mit $N_r$ realen Komponenten ist, dessen $n$-te Komponente, wobei $n = 1, 2, ... , Nn$ ist, gleich dem Symbol ist, das dem Subträger 1 zugeordnet wird, das auf der $n$-ten Empfangsantenne empfangen wird, nach OFDM/OQAM-Demodulation und Extraktion des realen Teils.

9. Nicht abnehmbares oder teilweise oder vollständig abnehmbares Datenspeichermedium, umfassend Computerprogrammcodebefehle für das Ausführen der Schritte eines Verfahrens zum drahtlosen Senden nach einem der Ansprüche 1 bis 3 oder eines Verfahrens für drahtlose Kommunikation nach Anspruch 4.

10. Computerprogramm, das von einem Kommunikationsnetz heruntergeladen werden kann, und/oder auf einem computerlesbaren Medium gespeichert ist und/oder von einem Mikroprozessor ausgeführt werden kann, **dadurch gekennzeichnet, dass** es Anweisungen für das Ausführen der Schritte eines Verfahrens zum drahtlosen Senden nach einem der Ansprüche 1 bis 3 oder eines Verfahrens für drahtlose Kommunikation nach Anspruch 4 aufweist.

**Claims**

1. Method of wireless transmission, by a wireless transmitter furnished with $M \geq 1$ transmit antenna(s), of data intended for $R \geq 1$ wireless receiver(s), each wireless receiver No. $r$, where $r = 1, ..., R$ being furnished with $N_r$ receive antennas,

where $\sum_{r=1}^{R} N_r = N$ and $N \geq 2$, in which said data are transmitted by means of an OFDM/OQAM modulation comprising $L \geq 1$ sub-carriers, said method comprising, for at least one value of the integer $l$, where $0 \leq l \leq L - 1$, a prior step of obtaining an estimate $\widehat{\mathbf{H}}^{(l)}$ of the transfer matrix, of dimension $N \cdot M$, of the MIMO channel between said transmit antennas and said receive antennas, and, for said value of $l$, furthermore comprising the following steps:

- placement (E1) of data to be transmitted in a data vector $X^{(l)}$ with $N$ real components,
- calculation (E2) of a coded data vector $S^{(l)} \equiv \mathbf{W}^{(l)} \cdot X^{(l)}$ with $M$ components, where $\mathbf{W}^{(l)}$ is a precoding matrix of dimension $M \cdot N$ of the form:

$$\mathbf{W}^{(l)} = \mathbf{Q} \cdot \mathfrak{R}(\widehat{\mathbf{H}}^{(l)} \cdot \mathbf{P}^{(l)}),$$

where:

  ◦ $\mathbf{P}^{(l)}$ is the matrix, of dimension $M \cdot N$, associated with a spatial multiplexing, $\mathfrak{R}(\ )$ represents the extraction of the real part, and

  ◦ $\mathbf{Q} = \left(\widehat{\mathbf{H}}^{(l)}\right)^{\mathrm{H}} \cdot \left[\widehat{\mathbf{H}}^{(l)} \cdot \left(\widehat{\mathbf{H}}^{(l)}\right)^{\mathrm{H}}\right]^{-1},$ and

- transmission (E3) of said coded data vector $S^{(l)}$ on the sub-carrier $l$, by transmitting the $m$-th component, where $m = 1,2, ...,M$, of the vector $S^{(l)}$ from the $m$-th transmit antenna.

2. Method of wireless transmission according to Claim 1, **characterized in that** said spatial multiplexing is carried out by means of the following MMSE precoder:

$$\mathbf{P}^{(l)} = \left(\widehat{\mathbf{H}}^{(l)}\right)^{\mathbf{H}} \left(\widehat{\mathbf{H}}^{(l)}\left(\widehat{\mathbf{H}}^{(l)}\right)^{\mathbf{H}} + \frac{1}{SNR}\mathbf{I}\right)^{-1}.$$

3. Method of wireless transmission according to Claim 1, **characterized in that** said spatial multiplexing is carried out by means of the following time-reversal precoder:

$$\mathbf{P}^{(l)} = \left(\widehat{\mathbf{H}}^{(l)}\right)^{\mathbf{H}}.$$

4. Method of wireless communication, comprising the steps of a method of transmission according to any one of Claims 1 to 3, and for said value of $l$, at least one wireless receiver No. $r$, where $r = 1, ..., R$, which implements the following steps:

   - reception of said coded data,

   - determination (R1) of a received vector $Y_{(r)}^{(l)}$, and

   - obtaining (R2) of a decoded data vector $T_{(r)}^{(l)}$ on the basis of said received vector $Y_{(r)}^{(l)}$,

   where the received vector $Y_{(r)}^{(l)}$ is the vector with $N_r$ real components whose $n$-th component, where $n = 1,2, ..., N_r$, is equal to the symbol associated with the sub-carrier $l$ received on the $n$-th receive antenna, after OFDM/OQAM demodulation and extraction of the real part.

5. Wireless transmitter furnished with $M \geq 1$ transmit antenna(s), comprising means for transmitting data intended for $R \geq 1$ wireless receiver(s), each wireless receiver No. $r$, where $r = 1, ... , R$ being furnished with $N_r$ receive antennas, where $\sum_{r=1}^{R} N_r = N$ and $N \geq 2$, by means of an OFDM/OQAM modulation comprising $L \geq 1$ sub-carriers, as well as means for obtaining, for at least one value of the integer $l$, where $0 \leq l \leq L - 1$, an estimate $\hat{\mathbf{H}}^{(l)}$ of the transfer matrix, of dimension $N \cdot M$, of the MIMO channel between said transmit antennas and said receive antennas, and for said value of $l$, furthermore comprising means for:

   - placing data to be transmitted in a data vector $X^{(l)}$ with $N$ real components,
   - calculating a coded data vector $S^{(l)} \equiv \mathbf{W}^{(l)} \cdot X^{(l)}$ with $M$ components, where $\mathbf{W}^{(l)}$ is a precoding matrix of dimension $M \cdot N$ of the form:

$$\mathbf{W}^{(l)} = \mathbf{Q} \cdot \mathfrak{R}(\widehat{\mathbf{H}}^{(l)} \cdot \mathbf{P}^{(l)}),$$

   where:

   ∘ $\mathbf{P}^{(l)}$ is the matrix, of dimension $M \cdot N$, associated with a spatial multiplexing, $\mathfrak{R}(\ )$ represents the extraction of the real part, and

   $$\mathbf{Q} = \left(\widehat{\mathbf{H}}^{(l)}\right)^{\mathbf{H}} \cdot \left[\widehat{\mathbf{H}}^{(l)} \cdot \left(\widehat{\mathbf{H}}^{(l)}\right)^{\mathbf{H}}\right]^{-1},$$
   ∘ and

   - transmitting said coded data vector $S^{(l)}$ on the sub-carrier $l$, by transmitting the $m$-th component, where $m =1,2,..., M$, of the vector $S^{(l)}$ from the $m$-th transmit antenna.

6. Wireless transmitter according to Claim 5, **characterized in that** said spatial multiplexing is carried out by means of the following MMSE precoder:

$$\mathbf{P}^{(l)} = \left(\widehat{\mathbf{H}}^{(l)}\right)^{\mathbf{H}} \left(\widehat{\mathbf{H}}^{(l)}\left(\widehat{\mathbf{H}}^{(l)}\right)^{\mathbf{H}} + \frac{1}{SNR}\mathbf{I}\right)^{-1}.$$

7. Wireless transmitter according to Claim 5, **characterized in that** said spatial multiplexing is carried out by means of the following time-reversal precoder:

$$\mathbf{P}^{(l)} = \left(\widehat{\mathbf{H}}^{(l)}\right)^{\mathbf{H}}.$$

8. Wireless communication system, comprising a wireless transmitter according to any one of Claims 5 to 7, as well as said $R$ wireless receiver(s), and for said value of $l$, at least one wireless receiver No. $r$, where $r = 1, \ldots , R$, which comprises means for:

   - receiving said coded data,

   - determining a received vector $Y_{(r)}^{(l)}$, and

   - obtaining a decoded data vector $T_{(r)}^{(l)}$ on the basis of said received vector $Y_{(r)}^{(l)}$,

   where the received vector $Y_{(r)}^{(l)}$ is the vector with $N_r$ real components whose $n$-th component, where $n = 1,2, \ldots, N_r$, is equal to the symbol associated with the sub-carrier $l$ received on the $n$-th receive antenna, after OFDM/OQAM demodulation and extraction of the real part.

9. Irremovable or partially or totally removable means for storing data, comprising computer program code instructions for the execution of the steps of a method of wireless transmission according to any one of Claims 1 to 3, or of a method of wireless communication according to Claim 4.

10. Computer program downloadable from a communication network and/or stored on a medium readable by computer and/or executable by a microprocessor, **characterized in that** it comprises instructions for the execution of the steps of a method of wireless transmission according to any one of Claims 1 to 3, or of a method of wireless communication according to Claim 4.

$$e^{i\frac{\pi}{2}j} \qquad Q\sqrt{2}$$

$a_{0,j} \longrightarrow \boxed{\times} \longrightarrow \boxed{\times} \longrightarrow a'_{0,j}$

$$Q\sqrt{2}e^{i\frac{2\pi}{Q}l\left(k-\frac{\lambda-1}{2}+\frac{Q}{4}\right)}$$

$$e^{i\frac{\pi}{2}j}$$

$a_{l,j} \longrightarrow \boxed{\times} \longrightarrow \boxed{\times} \longrightarrow a'_{l,j}$

$$Q\sqrt{2}e^{i\frac{2\pi}{Q}(Q-1)\left(k-\frac{\lambda-1}{2}+\frac{Q}{4}\right)}$$

$$e^{i\frac{\pi}{2}j}$$

$a_{Q-1,j} \longrightarrow \boxed{\times} \longrightarrow \boxed{\times} \longrightarrow a'_{Q-1,j}$

**FIG. 1a**

$a'_{0,j} \longrightarrow$

**IFFT**
$Q \times Q$

$\longrightarrow a''_{0,j}$

$a'_{l,j} \longrightarrow \qquad \longrightarrow a''_{l,j}$

$a'_{Q-1,j} \longrightarrow \qquad \longrightarrow a''_{Q-1,j}$

**FIG. 1b**

**FIG. 1c**

**FIG. 2**

**FIG. 3a**

**FIG. 3b**

$$Q\sqrt{2} \qquad e^{-i\frac{\pi}{2}(j-\alpha)}$$

$$d'_{0,j} \xrightarrow{\hspace{2cm}} \otimes \xrightarrow{\hspace{3cm}} \otimes \xrightarrow{\hspace{1cm}} d_{0,j}$$

$$Q\sqrt{2}e^{i\frac{2\pi}{Q}l\left(k-\frac{\lambda-1}{2}+\frac{Q}{4}\right)} \qquad e^{-i\frac{\pi}{2}(j-\alpha)}$$

$$d'_{l,j} \xrightarrow{\hspace{2cm}} \otimes \xrightarrow{\hspace{3cm}} \otimes \xrightarrow{\hspace{1cm}} d_{l,j}$$

$$Q\sqrt{2}e^{i\frac{2\pi}{Q}(Q-1)\left(k-\frac{\lambda-1}{2}+\frac{Q}{4}\right)} \qquad e^{-i\frac{\pi}{2}(j-\alpha)}$$

$$d'_{Q-1,j} \xrightarrow{\hspace{2cm}} \otimes \xrightarrow{\hspace{3cm}} \otimes \xrightarrow{\hspace{1cm}} d_{Q-1,j}$$

**FIG. 3c**

$$v[k] \longrightarrow \boxed{\text{S/P}} \rightarrow \boxed{\text{polyphase}} \rightarrow \boxed{\text{FFT}} \rightarrow \boxed{\text{postdémodulation}} \longrightarrow d_{0,j}$$
$$\longrightarrow d_{l,j}$$
$$\longrightarrow d_{Q-1,j}$$

**FIG. 4**

**FIG. 5**

antenne de réception *0*

$Y_0^{(0)}$

$Y_0^{(l)}$

$Y_0^{(L-1)}$

antenne de réception *n*

$Y_n^{(0)}$

$Y_n^{(l)}$

$Y_n^{(L-1)}$

antenne de réception *(N-1)*

$Y_{N-1}^{(0)}$

$Y_{N-1}^{(l)}$

$Y_{N-1}^{(L-1)}$

**FIG. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Performance Comparison between FBMC and OFDM in MIMO Systems under Channel Uncertainty. **M. PAYARÔ ; A. PASCUAL-ISERTE ; M. NÁJAR.** IEEE Wireless Conférence 2010. Avril 2010
- Spatial diversity Scheme to Efficiently Cancel ISI and ICI in OFDM-OQAM Systems. **NIZAR ZORBA ; FAOUZI BADER.** Journal of Computer Systems, Networks, and Communications. Hindawi Publishing Corporation, vol. 2010

- **B. LE FLOCH ; M. ALARD ; C. BERROU.** Coded Orthogonal Frequency Division Multiplex. *Proc. IEEE,* Juin 1995, vol. 83, 982-996
- **P. SIOHAN ; C. SICLET ; N. LACAILLE.** Analysis and Design of OFDM/OQAM Systems Based on Filterbank Theory. *IEEE Transactions on Signal Processing,* Mai 2002, vol. 50 (5), 1170-1183